# EUROPEAN PATENT SPECIFICATION

(11) **EP 2 048 897 B1**
(45) Date of publication and mention of the grant of the patent: **03.05.2017**
(21) Application number: 07118401.4
(22) Date of filing: 12.10.2007
(51) Int. Cl.: H04W 76/02, H04W 36/06

(54) **A method for reducing the risk of dropped calls in a mobile communications network**
Verfahren zur Verringerung des Risikos von Anrufunterbrechungen in einem mobilen Kommunikationsnetz
Procédé pour réduire le risque de coupures d'appels dans un réseau de communication mobile

(43) Date of publication of application: 15.04.2009
(73) Proprietor: Telefonaktiebolaget LM Ericsson (publ), 164 83 Stockholm (SE)
(72) Inventor: Lindoff, Bengt, SE-237 36 Bjärred (SE); Pamp, Johan, SE-233 92 Svedala (SE)
(74) Representative: Boco IP Oy Ab

(56) References cited:
- EP-A- 0 933 962
- EP-A- 1 838 121
- WO-A-00/79808

## Description

### Technical Field

The present invention relates to mobile communication networks, and more particularly to a method and apparatus for reducing the risk of dropped calls in the mobile communication network.

### Background

One of the most irritating situations for mobile terminal users is when their call is dropped by the network. There are many different reasons why a call may be dropped but the most common reasons fall into three categories: (a) going out of coverage, (b) bad cell planning and (c) sudden abrupt changes in the interference scenario.

Dropped calls due to bad cell planning typically shows up as an increased likelihood for dropped calls at a certain position or location within the network. The problems with abrupt changes in the interference scenario are something that may be a problem in current cellular systems but will most likely be a larger problem in cellular systems utilizing Time Division Duplex (TDD). Time Division Duplex means that the uplink and downlink is transmitted on the same carrier, i.e some kind of frequency domain carrier, but at different time instances, unlike in Frequency Division Duplex systems where the uplink and downlink are allocated to different carriers with a certain duplex frequency distance between the uplink and the downlink. In a typical TDD system, different TDD carriers are placed within a TDD band, e.g., 5 MHz carriers within a 20 MHz band, resulting in 4 carriers in total. With non-synchronized adjacent carriers, there will be a risk of mobile station to mobile station interference. In other words, a first mobile station, currently transmitting of carrier f1, is placed close to a second mobile station which is receiving on carrier f2. In such a. scenario, there will be a risk that the transmitting mobile station will block the other mobile station's receiver or, due to spectrum leakage, introduce a large noise floor in the receiving mobile station's receiver band. In both cases, the receiving mobile station will lose synchronization with the base station and the likely result will be a dropped call.

WO 00/79808 discloses a system and method of handing over mobile stations in a General Packet Radio Service (GPRS) radio telecommunications network to support voice services. An Old SGSN forwards a Modified PDP context request to an MS indicating that a change of cell is requested. The MS in turn accesses the new channel using pre-allocated TBF and sends a Routing Area Update Request to a New SGSN. Since the New SGSN previously acquired the context from the old SGSN and the GGSN GTP link set-up, the New SGSN immediately sends a Routing Area Update Accept to the MS. Data transfer then resumes and packets are sent directly to the MS with minimum interruption. After traffic resumption, an HLR update is performed in accordance with the standard.

EP1838121 discloses a method of re-routing a call between a user device and a third party device. The method comprises: setting up a call with the third party device using a first wireless connection between the user device and an access point; monitoring a quality parameter of the first wireless connection at the access point; automatically re-routing the call from the third party device to the user via a second wireless connection between the user device and a base station in response to determining that the quality parameter of the first wireless connection has fallen below a predetermined threshold.

EP0933962 discloses a method and apparatus for re-establishing a communication in a wireless communication system. A serving base-station detects that a synchronization with a mobile station has been lost and chooses a target base-station to attempt to establish synchronization with the mobile station. If synchronization is established, the communication with the mobile station is re-established by the target base-station.

Typically, the mobile station or the base station can detect when the communication link is out-of-sync, and ideally a handover to another carrier or radio access technology could take place. However, the necessary signaling for the handover to take place is made on the current carrier, which is out of sync. Hence, the signaling in the downlink and/or uplink does not reach the base station/mobile station and therefore the call is dropped.

Therefore there is a need for a method and apparatus for reducing the risk of a dropped call in a communication system even when an out-of sync condition has been detected on the communication link.

### Summary

It is an object of the invention to obviate at least some of the above disadvantages and to provide improved systems, apparatuses and methods for reducing the risk of dropped calls when a mobile station experiences out-of-sync conditions.

According to one embodiment of the invention, a method for reducing the risk of dropped calls in a mobile communication network is disclosed. Secondary connection information is sent to a mobile station during an event via a first communication link using a first radio access technology. The network detects when that the mobile station has made a new connection on a second communication link specified in the secondary connection information and reroutes packets for the mobile station from the first communication link to the second communication link.

According to another embodiment of the invention, a radio network controller for a mobile communication system is disclosed. The radio network controller comprising a radio resources controller operative to: send secondary connection information to a mobile station during an event via a first communication link using a first radio access technology; detect when the mobile station makes a new connection on a second communication link specified in the secondary connection information; reroute packets for the mobile station from the first communication link to the second communication link.

According to another embodiment of the invention, a signaling method implemented by a mobile station for reducing the risk of dropped calls in a mobile communication network is disclosed. The mobile station receives secondary connection information during an event during a call from the network via a first communication link using a first radio access technology. The mobile station monitors sync conditions of the first communication link during the call. When the mobile station detects a first out-of-sync condition, the mobile station connects to the network via a second communication link specified in said secondary connection information to continue the call.

Further embodiments of the invention are defined in the dependent claims.

One of the advantages of the invention is that the risk of dropped calls in a communication network due to bad cell planning or abrupt changes in the interference level will be reduced.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of the invention will appear from the following detailed description of embodiments of the invention, with reference being made to the accompanying drawings, in which:
Fig. 1 illustrates an example mobile communication network for use with the invention;
Fig. 2 illustrates a block diagram of an example mobile station for use with the invention;
Fig. 3 is a flow chart of a signaling method implemented by a mobile station according to one embodiment of the invention;
Fig. 4 is a flow chart of a signaling method implemented by a base station according to one embodiment of the invention;
Figs. 5a - 5c illustrate a signaling method in an example mobile communication network according to one embodiment of the invention;
Fig. 6 illustrates a computer-readable medium according to one embodiment of the invention; and
Fig. 7 illustrates a computer-readable medium according to one embodiment of the invention.

### Detailed Description

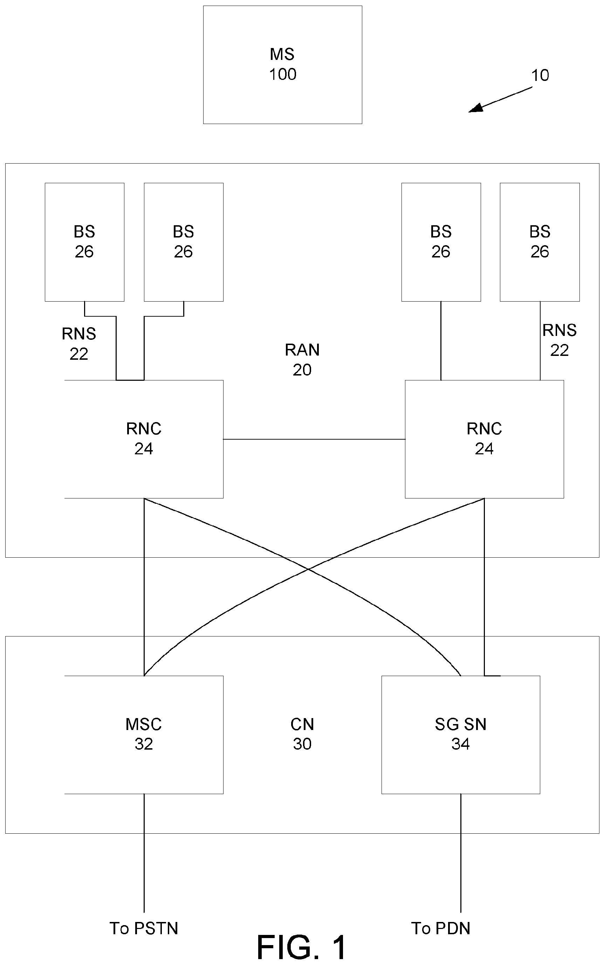

FIG. 1 illustrates an example wireless mobile communication network 10 for providing mobile communication services to one or more mobile stations 100. The term mobile station as used herein refers to any portable communication device having the ability to connect wirelessly to a communication network. The term mobile station comprises, without limitation, mobile telephones, pagers, personal digital assistants, and laptop or handheld computers. The example wireless communication network 10 comprises a Wideband Code Division Multiple Access (WCDMA) system as specified by the Third Generation Partnership Project (3GPP). Those skilled in the art will recognize that the present invention may also be used in mobile communication systems based on other standards, and the invention is not limited thereto.

The mobile communication network 10 comprises a core network (CN) 30 connecting to one or more external packet data networks, such as the Internet, and one or more radio access networks 20. The core network 30 is responsible for switching and routing calls between the mobile stations 100 and external networks. The core network 30 may comprise a mobile switching center 32 for providing circuit-switched services and a serving GPRS support node 34 for providing packet switched services. The main function of the radio access network 20 is to provide mobile stations 100 with access to the core network 30. The radio access network 20 includes one or more radio network sub-systems 22. A radio network sub-system comprises a radio network controller 24 and one or more base stations 26. According to one embodiment of the invention, the mobile communication network 10 may have at least two radio access technologies operating in the network as will be described in more detail below.

The base stations 26 communicate with the mobile stations 100 over the air interface and are normally associated with a cell. A base station 26 may provide service in more than one cell. The radio network controller 24 is a network component that connects the radio access network 20 to the core network 30 and controls the radio access network functions. The radio network controller 24 manages the base stations 26 and radio resources within its domain and terminates radio resource control. Radio resource control is a protocol that provides control over the mobile station 100 by the radio network controller 24. The radio resource control functions performed by the radio network controller 24 includes measurement reporting, active set management and handover control.

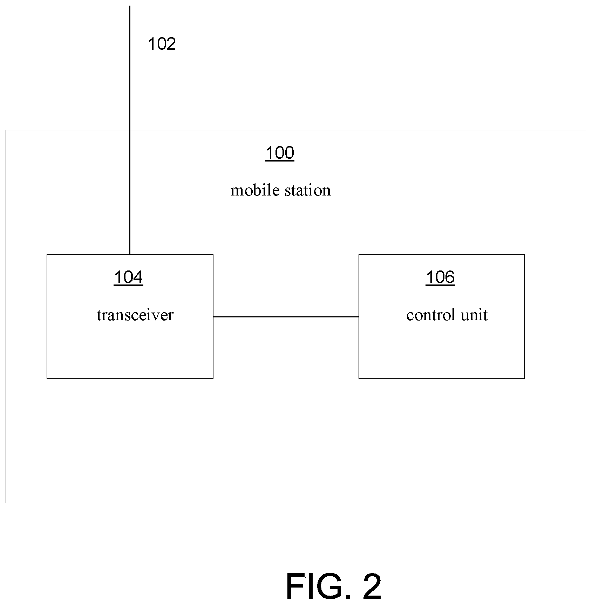

As illustrated in FIG. 2, the mobile stations 100 comprises, among other features, an antenna 102, a transceiver 104 for transmitting and receiving information and a control unit 106 for controlling the operation of the transceiver 104.

In a typical cellular system, there exist a number of out-of-sync detectors. Referring to WCDMA, there are out-of-sync detectors on both layer 1 and layer 3. On layer 1, there are 2 detectors. The first detector is based on the signal to noise ratio of the connection. The signal to noise ratio is detected and then compared to a predetermined level. For example, the SIR is measured and the 160 ms averaged SIR is compared to a predetermined level, wherein if the SIR is below the predetermined level then the out-of-sync condition is detected. The second detector is based on the block error rate (BLER) of the received signal. For example, if more than 20 erroneous blocks are detected in a row then a layer 1 out-of-sync condition is detected. Hence, both are used in parallel and as long as none of them detect an out-of-sync condition, the mobile station is in-sync.

In WCDMA, a layer 1 out-of-sync condition means that the mobile station turns off it's transmitter, in order to not interfere with the uplink. When the layer 1 out-of-sync condition is detected, a timer is started in layer 3 wherein if no correct packets are received before the timer expires then the mobile station will perform a connection release. In a typical situation, if one of the layer 1 out-of-sync conditions is detected, the probability of going back in-sync before the expiration of the layer 3 timer is very low.

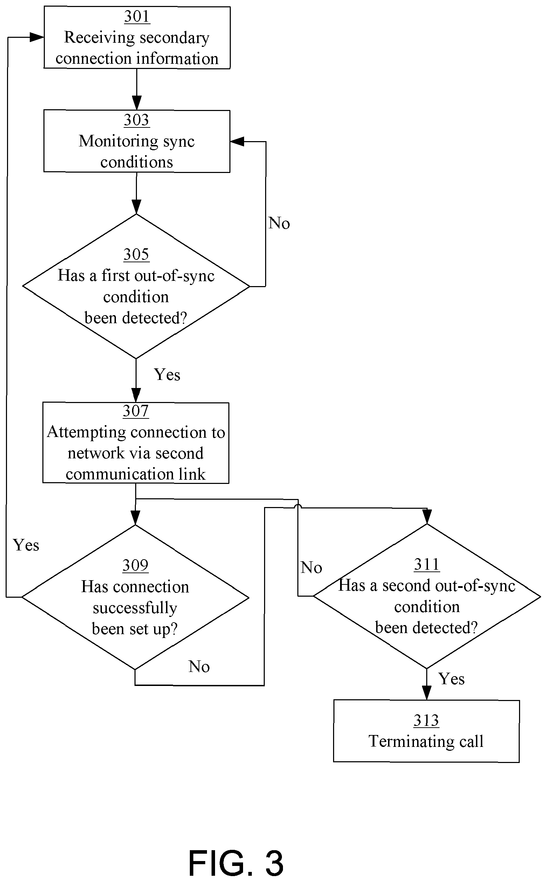

FIG. 3 illustrates a flow chart of a signaling method implemented by a mobile station for reducing the risk of dropped calls in a wireless communication network according to one embodiment of the invention. In this embodiment, the mobile station 100 is participating in a call via a first communication link to the network 10. The network 10 transmits secondary connection information to the mobile station 100 during an event. The event can be call set up or a handover but the invention is not limited thereto.

The secondary communication information contains information that the mobile station 100 can use to set up a new connection with the network when an out-of-sync condition occurs on the current communication link between the network 10 and the mobile station 100. For example, the secondary connection information may include a new carrier frequency in the same radio access technology that the mobile station 100 is currently using. Alternative, the secondary communication information may include a new carrier frequency in a different radio access technology than is presently being used.

Further, it may be described in the secondary connection information where the phone should try to reconnect if sync is lost with the base station. There could be several ways how to find adjacent cells depending on the location of the phone within the cell. There may for example be geographical information connected to this escape network, such as GPS-positioning.

In step 301, the mobile station 100 receives and stores the secondary communication information. The mobile station 100 then monitors the synchronization conditions of the first communication link during the call in step 303. The mobile station 100 continues to monitor the sync conditions of the first communication link until the call ends or until a first out-of-sync condition is detected by the mobile station 100 in step 305. When the first out-of-sync condition is detected, the mobile station 100 attempts to connect to the network via a second communication link which was specified in the secondary connection information in step 307.

The mobile station 100 then determines if the new connection on the second communication link has been successfully completed in step 309. When the connection setup is successful, the mobile station continues the connection on the second communication link. According to one embodiment of if the connection to the second communication link is not successful, the mobile station terminates the call. However, according to another embodiment of the invention, while the connection on the second communication link is being set up, the mobile station 100 continues to monitor the first communication link to determine if a second out-of-sync condition occurs in step 311. For example, in WCDMA systems, a timer with typically 3-5 seconds is initiated when the first out-of-sync condition is detected. In this case, the second out-of-sync condition will happen when the timer expires. As a result, in this illustrative example, the connection on the second communication link must be successfully set up before the expiration of the timer but the invention is not limited thereto. If the connection is not successfully set up before the second out-of-sync condition is detected, the mobile station 100 terminates the call in step 313.

Typically, out-of-sync conditions are also detected by the network. In prior systems, if the out-of-sync condition is detected by the network, the connection is closed down and all possible packets for the mobile station 100 in different buffers are thrown away. However, according to one embodiment of the invention, it is possible to feed the data packets from the old connection to the new connection without triggering a connection release at the network side.

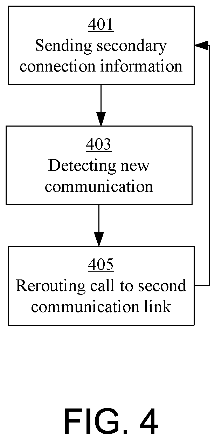

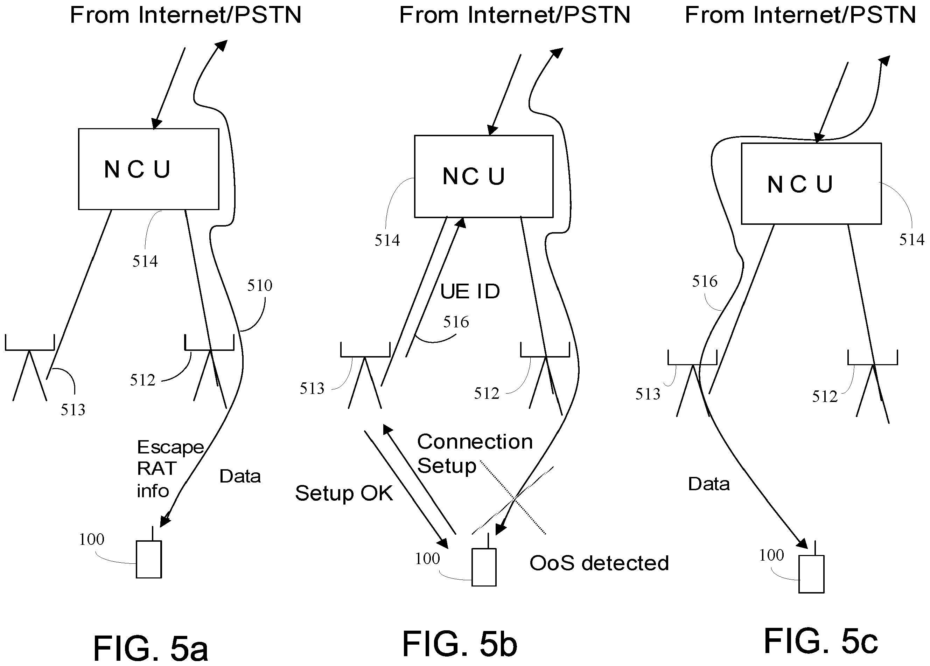

The operation of the network according to one embodiment of the invention will now be described with reference to Figures 4 and 5. In this embodiment, the mobile station 100 is participating in a call via a first communication link 510. The invention is however not limited to a phone call but could be any type of communication session with the base station. The term "call" is used as a generic term comprising any type of communication session in the following description. The mobile station 100 is connected to the network 10 via a first base station 512 with the current radio access technology. The network control unit 514 is connected to the backbone network which can be either the Internet or a PSTN network but the invention is not limited thereto. The network 10 transmits secondary connection information to the mobile station 100 during an event in step 401. The event can be call set up or a handover but the invention is not limited thereto. The secondary communication information contains information that the mobile station 100 can use to set up a new connection with the network when an out-of-sync condition occurs on the current communication link between the network 10 and the mobile station 100. For example, the secondary connection information may include a new carrier frequency in the same radio access technology that the mobile station 100 is currently using. Alternative, the secondary communication information may include a new carrier frequency in a different radio access technology than is presently being used.

When the mobile station 100 detects a first out-of-sync condition, the mobile station attempts to connect to the network 10 via a second communication link 516 and a second base station 513 as illustrated in Fig. 5b. When the network detects that the mobile station 100 is attempting a connection via the second communication link, the network 10 helps to set up the connection in step 403. Once the connection has been successfully set-up, the network, in step 405, reroutes the call packets to the second communication link 516 as illustrated in Fig. 5c.

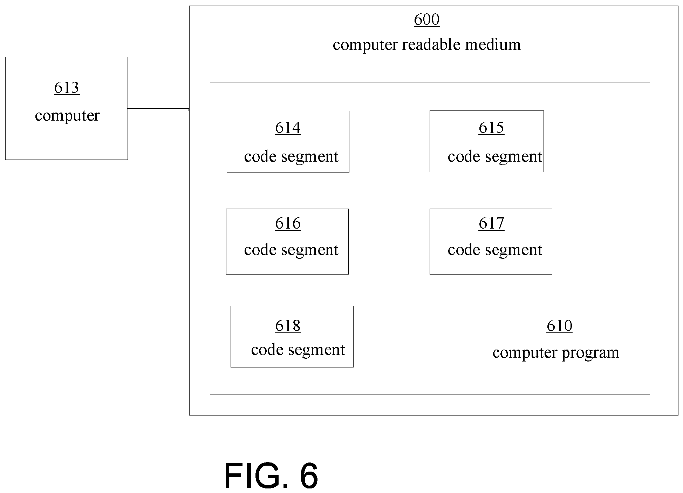

In another embodiment of the invention according to Figure 6, a computer-readable medium 600 is illustrated schematically. The computer-readable medium 600 has embodied thereon a computer program 610 for handling out-of-sync conditions for reducing the risk of dropped calls in a mobile communication network, for processing by a computer 613. The computer program comprises a code segment 614 for receiving secondary connection information during an event during a call from the network via a first communication link using a first radio access technology; a code segment 615 for monitoring sync conditions of the first communication link during the call; a code segment 616 for detecting a first out-of-sync condition; a code segment 617 for initiating connection to the network via a second communication link specified in said secondary connection information to continue the call; and a code segment 618 for terminating the call if the connection via the second communication link is not successfully complete before a second out-of-sync condition is detected.

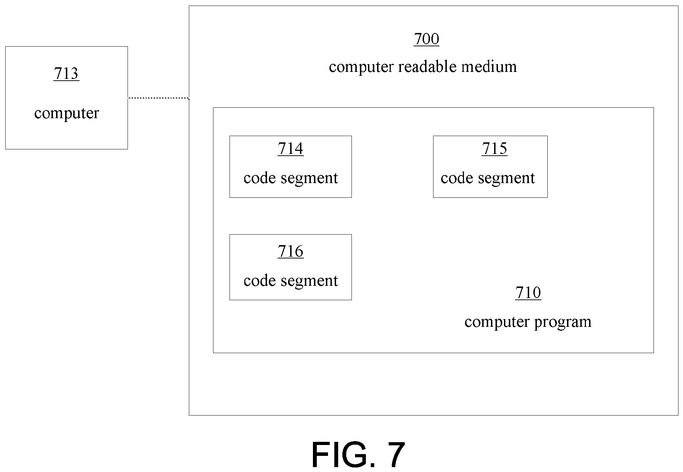

In another embodiment of the invention according to Figure 7, a computer-readable medium 700 is illustrated schematically. The computer-readable medium 700 has embodied thereon a computer program 710 for handling out-of-sync conditions for reducing the risk of dropped calls in a mobile communication network, for processing by a computer 713. The computer program comprises a code segment 714 for sending secondary connection information to a mobile station during an event via a first communication link using a first radio access technology; a code segment 715 for detecting when the mobile station makes a new connection on a second communication link specified in the secondary connection information; and a code segment 716 for rerouting packets for the mobile station from the first communication link to the second communication link.

The invention has been described herein with reference to various embodiments. However, a person skilled in the art would recognize numerous variations to the described embodiments that would still fall within the scope of the invention. For example, the method embodiments described herein describes the method through method steps being performed in a certain order. However, it is recognized that these sequences of events may take place in another order without departing from the scope of the invention. Furthermore, some method steps may be performed in parallel even though they have been described as being performed in sequence. In the same manner, it should be noted that, in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the invention is construed to be limited by the appended claims and all reasonable equivalents thereof.

## Claims

1. A method for reducing the risk of dropped communication sessions in a mobile communication network, comprising the steps of:
sending secondary connection information to a mobile station during an event via a first communication link using a radio access technology (401);
**characterized by**
at a first out-of-sync condition of the first communication link during a communication session, detecting when the mobile station makes a new connection on a second communication link specified in the secondary connection information (403); and
rerouting packets for the mobile station from the first communication link to the second communication link (404).

2. The method according to claim 1, wherein the event is communication session setup.

3. The method according to claim 1, wherein the event is communication session handover.

4. The method according to any of the claims 1-3, wherein the secondary connection information comprises a new frequency to use in the radio access technology.

5. The method according to any of the claims 1-3, wherein the secondary connection information comprises a new frequency to use in another radio access technology.

6. The method according to any of the claims 1-5, wherein the call is any type of communication session.

7. A radio network controller (24) for a mobile communication system, said radio network controller comprising a radio resources controller operative to:
send secondary connection information to a mobile station (100) during an event via a first communication link using a radio access technology;
**characterized in that** the radio resources controller is further operative to:
detect when the mobile station (100) makes a new connection on a second communication link specified in the secondary connection information and at a first out-of-sync condition of the first communication link during a communication session;
reroute packets for the mobile station (100) from the first communication link to the second communication link.

8. The radio network controller according to claim 7, wherein the event is communication session setup.

9. The radio network controller according to claim 7, wherein the event is communication session handover.

10. The radio network controller according to any of the claims 7-9, wherein the secondary connection information comprises a new frequency to use in the radio access technology.

11. The radio network controller according to any of the claims 7, wherein the secondary connection information comprises a new frequency to use in another radio access technology.

12. A signaling method implemented by a mobile station for reducing the risk of dropped communication sessions in a mobile communication network, comprising the steps of:
receiving secondary connection information during an event during a communication session from the network via a first communication link using a radio access technology (301);
**characterized by**
monitoring sync conditions of the first communication link during the communication session (303);
detecting a first out-of-sync condition (305);initiating connection to the network via a second communication link specified in said secondary connection information to continue the communication session (307).

13. The method according to claim 12, wherein the event is communication session setup.

14. The method according to claim 12, wherein the event is communication session handover.

15. The method according to any of the claims 12-14, wherein the secondary connection information comprises a new frequency to use in the radio access technology.

16. The method according to any of the claims 12-14, wherein the secondary connection information comprises a new frequency to use in another radio access technology.

17. The method according to any of the claims 12-16, further comprising the step of:
terminating the communication session if the connection via the second communication link is not successfully complete before a second out-of-sync condition is detected (311,313).

18. The method according to any of the claims 12-17, wherein the first out-of-sync condition occurs when the signal to noise ratio falls below a predetermined value.

19. The method according to any of the claims 12-17, wherein the first out-of-sync condition occurs based on a block error rate.

20. The method according to claim 17, wherein the second out-of-sync condition is detected when a timer which is started at the detection of the first out-of-sync condition expires.

21. The method according to any of the claims 12-20, wherein the communication session is a phone call.

22. A mobile station capable of communicating in a mobile communication network, comprising:
a transceiver to transmit and receive data;
a control unit to control the transceiver, the control unit configured to:
receive secondary connection information during an event during a communication session from the network via a first communication link using a radio access technology;
monitor sync conditions of the first communication link during the communication session;
detect a first out-of-sync condition;
**characterized in that** the control unit is further configured to
initiate connection to the network via a second communication link specified in said secondary connection information to continue the communication session.

23. The mobile station according to claim 22, wherein the event is communication session setup.

24. The mobile station according to claim 22, wherein the event is communication session handover.

25. The mobile station according to any of the claims 22-24, wherein the secondary connection information comprises a new frequency to use in the radio access technology.

26. The mobile station according to any of the claims 22-24, wherein the secondary connection information comprises a new frequency to use in another radio access technology.

27. The mobile station according to any of the claims 22-26, wherein the control unit is further configured to:
terminate the communication session if the connection via the second communication link is not successfully complete before a second out-of-sync condition is detected.

28. The mobile station according to any of the claims 22-27, wherein the first out-of-sync condition occurs when the signal to noise ratio falls below a predetermined value.

29. The mobile station according to any of the claims 22-27, wherein the first out-of-sync condition occurs based on a block error rate.

30. The mobile station according to claim 27, wherein the second out-of-sync condition is detected when a timer which is started at the detection of the first out-of-sync condition expires.

31. The mobile station according to any of the claims 22-27, wherein the call is any type of communication session.

32. A computer readable medium storing code for controlling a mobile station when said computer program code means is run by an electronic device of the mobile station having computer capabilities, said code comprising:
code for receiving secondary connection information during an event during a communication session from the network via a first communication link using a radio access technology;
code for monitoring sync conditions of the first communication link during the communication session;
code for detecting a first out-of-sync condition;
**characterized by**
code for initiating connection to the network via a second communication link specified in said secondary connection information to continue the communication session.

33. The computer readable medium according to claim 32, further comprising:
code for terminating the communication session if the connection via the second communication link is not successfully complete before a second out-of-sync condition is detected.

34. A computer readable medium storing code for a radio network controller, said code comprising:
code for sending secondary connection information to a mobile station during an event via a first communication link using a radio access technology;
**characterized by**
code for detecting when the mobile station makes a new connection on a second communication link specified in the secondary connection information and at a first out-of-sync condition of the first communication link during a communication session; and
code for rerouting packets for the mobile station from the first communication link to the second communication link, when said computer program code means is run by an electronic device of the radio network controller having computer capabilities.

## Patentansprüche

1. Verfahren zum Verringern des Risikos abgebrochener Kommunikationssitzungen in einem Mobilkommunikationsnetzwerk, die Schritte umfassend:
während eines Ereignisses erfolgendes Senden von Sekundärverbindungsinformation an eine Mobilstation über eine erste Kommunikationsverbindung unter Verwendung einer Funkzugangstechnologie (401);
**gekennzeichnet durch**:
bei einer ersten Synchronisationsverlustbedingung der ersten Kommunikationsverbindung während einer Kommunikationssitzung erfolgendes Ermitteln, wann die Mobilstation eine neue Verbindung auf einer in der Sekundärverbindungsinformation angegebenen zweiten Kommunikationsverbindung aufbaut (403); und
Umleiten von Paketen für die Mobilstation von der ersten Kommunikationsverbindung zur zweiten Kommunikationsverbindung (404).

2. Verfahren nach Anspruch 1, worin das Ereignis Kommunikationssitzungsaufbau ist.

3. Verfahren nach Anspruch 1, worin das Ereignis Kommunikationssitzungsübergabe ist.

4. Verfahren nach einem der Ansprüche 1 bis 3, worin die Sekundärverbindungsinformation eine neue Frequenz umfasst, die in der Funkzugangstechnologie zu verwenden ist.

5. Verfahren nach einem der Ansprüche 1 bis 3, worin die Sekundärverbindungsinformation eine neue Frequenz umfasst, die in einer anderen Funkzugangstechnologie zu verwenden ist.

6. Verfahren nach einem der Ansprüche 1 bis 5, worin das Gespräch jegliche Art von Kommunikationssitzung ist.

7. Funknetzcontroller (24) für ein Mobilkommunikationssystem, wobei der Funknetzcontroller einen Funkressourcencontroller umfasst, der betriebsfähig ist:
während eines Ereignisses Sekundärverbindungsinformation über eine erste Kommunikationsverbindung unter Verwendung einer Funkzugangstechnologie an eine Mobilstation (100) zu senden;
**dadurch gekennzeichnet, dass** der Funkressourcencontroller ferner betriebsfähig ist:
zu ermitteln, wann die Mobilstation (100) während einer Kommunikationssitzung eine neue Verbindung auf einer in der Sekundärverbindungsinformation angegebenen zweiten Kommunikationsverbindung und bei einer ersten Synchronisationsverlustbedingung der ersten Kommunikationsverbindung aufbaut;
Pakete für die Mobilstation (100) von der ersten Kommunikationsverbindung zur zweiten Kommunikationsverbindung umzuleiten.

8. Funknetzcontroller nach Anspruch 7, worin das Ereignis Kommunikationssitzungsaufbau ist.

9. Funknetzcontroller nach Anspruch 7, worin das Ereignis Kommunikationssitzungsübergabe ist.

10. Funknetzcontroller nach einem der Ansprüche 7 bis 9, worin die Sekundärverbindungsinformation eine neue Frequenz umfasst, die in der Funkzugangstechnologie zu verwenden ist.

11. Funknetzcontroller nach einem der Ansprüche 7, worin die Sekundärverbindungsinformation eine neue Frequenz umfasst, die in einer anderen Funkzugangstechnologie zu verwenden ist.

12. Signalisierungsverfahren, durch eine Mobilstation implementiert, zum Verringern des Risikos abgebrochener Kommunikationssitzungen in einem Mobilkommunikationsnetzwerk, die Schritte umfassend:
während eines Ereignisses während einer Kommunikationssitzung erfolgendes Empfangen von Sekundärverbindungsinformation vom Netzwerk über eine erste Kommunikationsverbindung unter Verwendung einer Funkzugangstechnologie (301);
**gekennzeichnet durch**:
Überwachen von Synchronisationsbedingungen der ersten Kommunikationsverbindung während der Kommunikationssitzung (303);
Ermitteln einer ersten Synchronisationsverlustbedingung (305);
Einleiten einer Verbindung zum Netzwerk über eine in der Sekundärverbindungsinformation angegebene zweite Kommunikationsverbindung, um die Kommunikationssitzung fortzusetzen (307).

13. Verfahren nach Anspruch 12, worin das Ereignis Kommunikationssitzungsaufbau ist.

14. Verfahren nach Anspruch 12, worin das Ereignis Kommunikationssitzungsübergabe ist.

15. Verfahren nach einem der Ansprüche 12 bis 14, worin die Sekundärverbindungsinformation eine neue Frequenz umfasst, die in der Funkzugangstechnologie zu verwenden ist.

16. Verfahren nach einem der Ansprüche 12 bis 14, worin die Sekundärverbindungsinformation eine neue Frequenz umfasst, die in einer anderen Funkzugangstechnologie zu verwenden ist.

17. Verfahren nach einem der Ansprüche 12 bis 16, ferner den Schritt umfassend:
Beenden der Kommunikationssitzung, wenn die Verbindung über die zweite Kommunikationsverbindung nicht erfolgreich hergestellt ist, bevor eine zweite Synchronisationsverlustbedingung ermittelt wird (311, 313).

18. Verfahren nach einem der Ansprüche 12 bis 17, worin die erste Synchronisationsverlustbedingung auftritt, wenn das Signal-Rausch-Verhältnis unter einen vorbestimmten Wert fällt.

19. Verfahren nach einem der Ansprüche 12 bis 17, worin die erste Synchronisationsverlustbedingung beruhend auf einer Blockfehlerrate auftritt.

20. Verfahren nach Anspruch 17, worin die zweite Synchronisationsverlustbedingung ermittelt wird, wenn ein Zeitgeber abläuft, der bei der Ermittlung der ersten Synchronisationsverlustbedingung gestartet wird.

21. Verfahren nach einem der Ansprüche 12 bis 20, worin die Kommunikationssitzung ein Telefongespräch ist.

22. Mobilstation, imstande zum Kommunizieren in einem Mobilkommunikationsnetzwerk, umfassend:
einen Sendeempfänger, um Daten zu senden und zu empfangen;
eine Steuerungseinheit, um den Sendeempfänger zu steuern, wobei die Steuerungseinheit dafür konfiguriert ist:
während eines Ereignisses während einer Kommunikationssitzung Sekundärverbindungsinformation vom Netzwerk über eine erste Kommunikationsverbindung unter Verwendung einer Funkzugangstechnologie zu empfangen;
Synchronisationsbedingungen der ersten Kommunikationsverbindung während der Kommunikationssitzung zu überwachen;
eine erste Synchronisationsverlustbedingung zu ermitteln;
**dadurch gekennzeichnet, dass** die Steuerungseinheit ferner dafür konfiguriert ist:
eine Verbindung zum Netzwerk über eine in der Sekundärverbindungsinformation angegebene zweite Kommunikationsverbindung einzuleiten, um die Kommunikationssitzung fortzusetzen.

23. Mobilstation nach Anspruch 22, worin das Ereignis Kommunikationssitzungsaufbau ist.

24. Mobilstation nach Anspruch 22, worin das Ereignis Kommunikationssitzungsübergabe ist.

25. Mobilstation nach einem der Ansprüche 22 bis 24, worin die Sekundärverbindungsinformation eine neue Frequenz umfasst, die in der Funkzugangstechnologie zu verwenden ist.

26. Mobilstation nach einem der Ansprüche 22 bis 24, worin die Sekundärverbindungsinformation eine neue Frequenz umfasst, die in einer anderen Funkzugangstechnologie zu verwenden ist.

27. Mobilstation nach einem der Ansprüche 22 bis 26, worin die Steuerungseinheit ferner dafür konfiguriert ist:
die Kommunikationssitzung zu beenden, wenn die Verbindung über die zweite Kommunikationsverbindung nicht erfolgreich hergestellt ist, bevor eine zweite Synchronisationsverlustbedingung ermittelt wird.

28. Mobilstation nach einem der Ansprüche 22 bis 27, worin die erste Synchronisationsverlustbedingung auftritt, wenn das Signal-Rausch-Verhältnis unter einen vorbestimmten Wert fällt.

29. Mobilstation nach einem der Ansprüche 22 bis 27, worin die erste Synchronisationsverlustbedingung beruhend auf einer Blockfehlerrate auftritt.

30. Mobilstation nach Anspruch 27, worin die zweite Synchronisationsverlustbedingung ermittelt wird, wenn ein Zeitgeber abläuft, der bei der Ermittlung der ersten Synchronisationsverlustbedingung gestartet wird.

31. Mobilstation nach einem der Ansprüche 22 bis 27, worin das Gespräch jegliche Art von Kommunikationssitzung ist.

32. Computerlesbares Medium, das Code zum Steuern einer Mobilstation speichert, wenn die Computerprogrammcodemittel durch eine elektronische Vorrichtung der Mobilstation mit Computerfähigkeiten ausgeführt werden, wobei der Code umfasst:
Code zum während eines Ereignisses während einer Kommunikationssitzung erfolgenden Empfangen von Sekundärverbindungsinformation vom Netzwerk über eine erste Kommunikationsverbindung unter Verwendung einer Funkzugangstechnologie;
Code zum Überwachen von Synchronisationsbedingungen der ersten Kommunikationsverbindung während der Kommunikationssitzung;
Code zum Ermitteln einer ersten Synchronisationsverlustbedingung;
**gekennzeichnet durch**:
Code zum Einleiten einer Verbindung zum Netzwerk über eine in der Sekundärverbindungsinformation angegebene zweite Kommunikationsverbindung, um die Kommunikationssitzung fortzusetzen.

33. Computerlesbares Medium nach Anspruch 32, ferner umfassend:
Code zum Beenden der Kommunikationssitzung, wenn die Verbindung über die zweite Kommunikationsverbindung nicht erfolgreich hergestellt ist, bevor eine zweite Synchronisationsverlustbedingung ermittelt wird.

34. Computerlesbares Medium, das Code für einen Funknetzcontroller speichert, wobei der Code umfasst:
Code zum während eines Ereignisses erfolgenden Senden von Sekundärverbindungsinformation an eine Mobilstation über eine erste Kommunikationsverbindung unter Verwendung einer Funkzugangstechnologie;
**gekennzeichnet durch**:
Code zum Ermitteln, wann die Mobilstation während einer Kommunikationssitzung eine neue Verbindung auf einer in der Sekundärverbindungsinformation angegebenen zweiten Kommunikationsverbindung und bei einer ersten Synchronisationsverlustbedingung der ersten Kommunikationsverbindung aufbaut; und
Code zum Umleiten von Paketen für die Mobilstation von der ersten Kommunikationsverbindung zur zweiten Kommunikationsverbindung, wenn die Computerprogrammcodemittel **durch** eine elektronische Vorrichtung des Funknetzcontrollers mit Computerfähigkeiten ausgeführt werden.

## Revendications

1. Procédé de réduction du risque de coupures de sessions de communication dans un réseau de communication mobile, comprenant l'étape ci-dessous consistant à :
envoyer des informations de connexion secondaire à une station mobile, au cours d'un événement, par l'intermédiaire d'une première liaison de communication, en utilisant une technologie d'accès radio (401) ;
**caractérisé par** les étapes ci-dessous consistant à :
dans le cadre d'un premier état de désynchronisation de la première liaison de communication au cours d'une session de communication, détecter le moment où la station mobile réalise une nouvelle connexion sur une seconde liaison de communication spécifiée dans les informations de connexion secondaire (403) ; et
réacheminer des paquets pour la station mobile, de la première liaison de communication vers la seconde liaison de communication (404).

2. Procédé selon la revendication 1, dans lequel l'événement est un établissement de session de communication.

3. Procédé selon la revendication. 1, dans lequel l'événement est un transfert intercellulaire de session de communication.

4. Procédé selon l'une quelconque des revendications 1 à 3, dans lequel les informations de connexion secondaire comportent une nouvelle fréquence à utiliser dans la technologie d'accès radio.

5. Procédé selon l'une quelconque des revendications 1 à 3, dans lequel les informations de connexion secondaire comportent une nouvelle fréquence à utiliser dans une autre technologie d'accès radio.

6. Procédé selon l'une quelconque des revendications 1 à 5, dans lequel l'appel est un type quelconque de session de communication.

7. Contrôleur de réseau radio (24) pour un système de communication mobile, ledit contrôleur de réseau radio comprenant un contrôleur de ressources radio exploitable de manière à :
envoyer des informations de connexion secondaire à une station mobile (100), au cours d'un événement, par l'intermédiaire d'une première liaison de communication, en utilisant une technologie d'accès radio ;
**caractérisé en ce que** le contrôleur de ressources radio est en outre exploitable de manière à :
détecter le moment où la station mobile (100) réalise une nouvelle connexion sur une seconde liaison de communication spécifiée dans les informations de connexion secondaire et dans le cadre d'un premier état de désynchronisation de la première liaison de communication au cours d'une session de communication ;
réacheminer des paquets pour la station mobile (100), de la première liaison de communication vers la seconde liaison de communication.

8. Contrôleur de réseau radio selon la revendication 7, dans lequel l'événement est un établissement de session de communication.

9. Contrôleur de réseau radio selon la revendication 7, dans lequel l'événement est un transfert intercellulaire de session de communication.

10. Contrôleur de réseau radio selon l'une quelconque des revendications 7 à 9, dans lequel les informations de connexion secondaire comportent une nouvelle fréquence à utiliser dans la technologie d'accès radio.

11. Contrôleur de réseau radio selon la revendication 7, dans lequel les informations de connexion secondaire comportent une nouvelle fréquence à utiliser dans une autre technologie d'accès radio.

12. Procédé de signalisation mis en oeuvre par une station mobile pour réduire le risque de coupures de sessions de communication dans un réseau de communication mobile, comprenant l'étape ci-dessous consistant à :
recevoir des informations de connexion secondaire au cours d'un événement pendant une session de communication, à partir du réseau, par l'intermédiaire d'une première liaison de communication, en utilisant une technologie d'accès radio (301) ;
**caractérisé par** les étapes ci-dessous consistant à :
surveiller des états de synchronisation de la première liaison de communication au cours de la session de communication (303) ;
détecter un premier état de désynchronisation (305) ;
initier une connexion au réseau, par l'intermédiaire d'une seconde liaison de communication spécifiée dans lesdites informations de connexion secondaire en vue de poursuivre la session de communication (307).

13. Procédé selon la revendication 12, dans lequel l'événement est un établissement de session de communication.

14. Procédé selon la revendication 12, dans lequel l'événement est un transfert intercellulaire de session de communication.

15. Procédé selon l'une quelconque des revendications 12 à 14, dans lequel les informations de connexion secondaire comportent une nouvelle fréquence à utiliser dans la technologie d'accès radio.

16. Procédé selon l'une quelconque des revendications 12 à 14, dans lequel les informations de connexion secondaire comportent une nouvelle fréquence à utiliser dans une autre technologie d'accès radio.

17. Procédé selon l'une quelconque des revendications 12 à 16, comprenant en outre l'étape ci-dessous consistant à :
mettre fin à la session de communication si la connexion par l'intermédiaire de la seconde liaison de communication n'est pas correctement achevée avant qu'un second état de désynchronisation ne soit détecté (311, 313).

18. Procédé selon l'une quelconque des revendications 12 à 17, dans lequel le premier état de désynchronisation se produit lorsque le rapport « signal sur bruit » est inférieur à une valeur prédéterminée.

19. Procédé selon l'une quelconque des revendications 12 à 17, dans lequel le premier état de désynchronisation se produit sur la base d'un taux d'erreurs sur les blocs.

20. Procédé selon la revendication 17, dans lequel le second état de désynchronisation est détecté lorsqu'un temporisateur qui est démarré lors de la détection du premier état de désynchronisation expire.

21. Procédé selon l'une quelconque des revendications 12 à 20, dans lequel la session de communication est un appel téléphonique.

22. Station mobile apte à communiquer dans un réseau de communication mobile, comprenant :
un émetteur-récepteur destiné à transmettre et à recevoir des données ;
une unité de commande destinée à commander l'émetteur-récepteur, l'unité de commande étant configurée de manière à :
recevoir des informations de connexion secondaire au cours d'un événement pendant une session de communication à partir du réseau, par l'intermédiaire d'une première liaison de communication, en utilisant une technologie d'accès radio ;
surveiller des états de synchronisation de la première liaison de communication au cours de la session de communication ;
détecter un premier état de désynchronisation ;
**caractérisé en ce que** l'unité de commande est en outre configurée de manière à :
initier une connexion au réseau par l'intermédiaire d'une seconde liaison de communication spécifiée dans lesdites informations de connexion secondaire en vue de poursuivre la session de communication.

23. Station mobile selon la revendication 22, dans laquelle l'événement est un établissement de session de communication.

24. Station mobile selon la revendication 22, dans laquelle l'événement est un transfert intercellulaire de session de communication.

25. Station mobile selon l'une quelconque des revendications 22 à 24, dans laquelle les informations de connexion secondaire comportent une nouvelle fréquence à utiliser dans la technologie d'accès radio.

26. Station mobile selon l'une quelconque des revendications 22 à 24, dans laquelle les informations de connexion secondaire comportent une nouvelle fréquence à utiliser dans une autre technologie d'accès radio.

27. Station mobile selon l'une quelconque des revendications 22 à 26, dans laquelle l'unité de commande est en outre configurée de manière à :
mettre fin à la session de communication si la connexion par l'intermédiaire de la seconde liaison de communication n'est pas correctement achevée avant qu'un second état de désynchronisation ne soit détecté.

28. Station mobile selon l'une quelconque des revendications 22 à 27, dans laquelle le premier état de désynchronisation se produit lorsque le rapport « signal sur bruit » est inférieur à une valeur prédéterminée.

29. Station mobile selon l'une quelconque des revendications 22 à 27, dans laquelle le premier état de désynchronisation se produit sur la base d'un taux d'erreurs sur les blocs.

30. Station mobile selon la revendication 27, dans laquelle le second état de désynchronisation est détecté lorsqu'un temporisateur qui est démarré lors de la détection du premier état de désynchronisation expire.

31. Station mobile selon l'une quelconque des revendications 22 à 27, dans laquelle l'appel est un type quelconque de session de communication.

32. Support lisible par ordinateur stockant un code pour commander une station mobile lorsque ledit moyen de code de programme informatique est exécuté par un dispositif électronique de la station mobile présentant des capacités informatiques, ledit code comprenant :
un code pour recevoir des informations de connexion secondaire au cours d'un événement pendant une session de communication, à partir du réseau, par l'intermédiaire d'une première liaison de communication, en utilisant une technologie d'accès radio ;
un code pour surveiller des états de synchronisation de la première liaison de communication au cours de la session de communication ;
un code pour détecter un premier état de désynchronisation ;
**caractérisé par**
un code pour initier une connexion au réseau, par l'intermédiaire d'une seconde liaison de communication spécifiée dans lesdites informations de connexion secondaire en vue de poursuivre la session de communication.

33. Support lisible par ordinateur selon la revendication 32, comprenant en outre :
un code pour mettre fin à la session de communication si la connexion par l'intermédiaire de la seconde liaison de communication n'est pas correctement achevée avant qu'un second état de désynchronisation ne soit détecté.

34. Support lisible par ordinateur stockant un code pour un contrôleur de réseau radio, ledit code comprenant :
un code pour envoyer des informations de connexion secondaire à une station mobile au cours d'un événement, par l'intermédiaire d'une première liaison de communication, en utilisant une technologie d'accès radio ;
**caractérisé par**
un code pour détecter le moment où la station mobile réalise une nouvelle connexion sur une seconde liaison de communication spécifiée dans les informations de connexion secondaire et dans le cadre d'un premier état de désynchronisation de la première liaison de communication au cours d'une session de communication ; et
un code pour réacheminer des paquets pour la station mobile, de la première liaison de communication à la seconde liaison de communication, lorsque ledit moyen de code de programme informatique est exécuté par un dispositif électronique du contrôleur de réseau radio présentant des capacités informatiques.
